# EUROPEAN PATENT SPECIFICATION

(11) **EP 3 727 028 B1**
(45) Date of publication and mention of the grant of the patent: **02.12.2026**
(21) Application number: 18786003.6
(22) Date of filing: 04.10.2018
(51) Int. Cl.: A23L 7/10, A23C 11/10, A23L 7/104, A23L 29/30, A23L 19/10, A23L 11/50, A23L 11/60, A23L 11/70

(54) **PLANT-BASED PRODUCT AND PROCESS**
PRODUKT UND VERFAHREN AUF PFLANZLICHER BASIS
PRODUIT À BASE DE PLANTES ET PROCÉDÉ CORRESPONDANT

(30) Priority: 22.12.2017 FI 20176171
(43) Date of publication of application: 28.10.2020
(60) Divisional application: 26210441.7 / 4 843 399
(73) Proprietor: Oddlygood Ltd, 00370 Helsinki (FI)
(72) Inventor: MYLLÄRINEN, Päivi, 00370 Helsinki (FI); OIKARINEN, Kristiina, 00370 Helsinki (FI); RAJAKARI, Kirsi, 00370 Helsinki (FI)
(74) Representative: Boco IP Oy Ab
(86) International application number: PCT/FI2018/050710
(87) International publication number: WO 2019/122499

(56) References cited:
- EP-A2- 2 604 127
- WO-A1-2010/023351
- WO-A1-2010/030220
- WO-A1-2014/123466
- WO-A1-2017/171601
- WO-A2-2009/106536
- US-A1- 2012 034 341

## Description

### FIELD OF THE INVENTION

The present invention concerns the field of food technology. The invention relates to an edible plant-based food product, which is suitable as a dairy-alternative product, a process for the manufacture thereof and uses related thereto.

### BACKGROUND OF THE INVENTION

Traditional fermented or acidified dairy-based food products are yoghurt, drinkable yoghurt, crème fraiche, sour cream etc. Some people need to avoid dairy-based products for reasons, such as lactose intolerance or allergy to milk protein. In addition, the number of consumers who voluntarily prefer a vegetarian or vegan diet is increasing. Plant-based food alternatives are also beneficial from an environmental standpoint because they can help in ensuring a sustainable development by utilizing renewable resources.

Various alternatives to dairy-based products have been introduced on the market and there is an increasing demand for such dairy-alternative or dairy-replacement products, such as plant-based products. Publication EP2604127 A2 discloses a process for producing a fermented seed-based food product. Two common types of products are soy-based products and oat-based products. Publication WO2009/106536 A2 discloses a fermented soymilk product. Oats have several health benefits and there are many oat-based products on the market. Some known manufacturing methods for cereal-based, especially oat-based, fermented products have been described in publications EP1175156 B1, EP 1337159 B1 and EP 2143335 B1. A liquid oat base for use in food is described in publication WO2014/177304 A1.

Publication EP 1175156 B1 describes a method for preparing a fiber-rich cereal emulsion. Cereal bran or whole-meal flakes are treated with hot water (up to 95°C), the obtained suspension is wet-ground and homogenized to obtain an emulsion and the emulsion is after-ripened and cooled. In the method, starch and β-glucan are not degraded by utilizing enzymes.

Publication EP 1337159 B1 describes a process for preparing a fermented product based on an oat suspension essentially free from soy and dairy milk. The process utilizes an oat base in the form of an aqueous oat suspension having a dry matter content of about 10%, the oat based dry matter comprising by weight: 10 to 50 % of maltose or of a mixture of maltose and glucose, from 30 to 80 % of maltodextrin and from 5 to 15 % of protein. The suspension is heated (above 80°C), pasteurized, cooled, inoculated with a starter culture, incubated to ferment the suspension and cooled. The aim of the process is to provide a non-dairy product rich in soluble β-glucan fiber, by avoiding degrading the β-glucan contained in the raw material itself. The protein content of the product is low. Publication EP 2143335 B1 is very similar to EP 1337159 B1.

Dairy-based yoghurt is traditionally prepared by evaporating a milk base with the desired fat content to the desired dry-matter content, whereafter the mixture is homogenized and pasteurized at about 90°C and cooled to fermenting temperature. The starter culture is added, and the mixture is fermented to about pH 4.5. The line for manufacturing traditional fermented dairy products comprises several units between which the mixture is moved.

The thickening of dairy-based yoghurt is due to coagulation of milk protein. Soy proteins have similar coagulation properties. Plant proteins are very different from each other and do not all behave in the same way. Some proteins are charged, such as soy protein, and some are uncharged, such as oat proteins. Charged proteins coagulate at a pH value in which the net charge of the molecule is zero (isoelectric point). It is easy to prepare fermented food products, such as yoghurt, from raw material with coagulating proteins. Oat proteins do not coagulate even at pH values around 3, which sets certain requirements on the process for producing oat-based fermented products.

The raw material used for dairy-alternative products causes challenges in producing fermented or acidified dairy-alternative products, especially cereal-based. One problem related to the prior art processes is that a traditional production line for dairy products cannot be used. This is mainly due to the thickness of the mixture to be treated. More specifically, plant-based raw material containing native starch and water-soluble beta-glucan cannot be treated with the traditional production line, because the beta-glucan will dissolve into the aqueous solution forming a thick viscous gel, which cannot be processed in the line. Further, native starch will increase the viscosity of the mixture in the pasteurization step and the mixture cannot be moved between the units in a conventional manner.

Further, when using known processes and raw materials for producing dairy-alternative products, it can be difficult to achieve the desired viscosity and texture of dairy-alternative products without using additives like thickeners and other texture modifying agents. Untreated beta-glucan causes slimy texture to the product. Additives may also be needed for maintaining the texture of the product during storage, since syneresis can occur.

As described above, there are several challenges in producing cereal-based, such as oat-based, fermented, acidified or neutral (non-acidic) food products and completely new methods have been needed. There is still a constant need to provide new and cost-effective alternatives for producing various plant-based dairy-alternative products.

### SUMMARY OF THE INVENTION

The object of the present invention is to overcome problems related to the prior art of producing plant-based dairy-alternative products. Especially, an object of the present invention is to provide a plant-based product, which can be manufactured in traditional production line for dairy-based products. Thus, one advantage with the present invention is that a cost-effective production process and product are provided since the new process and product do not need expensive investments in new production lines and apparatuses.

Another object with the present invention, is to provide a plant-based product with an improved texture and a stable structure. Especially, a texture and structure, which can be achieved without using additives like thickeners and other texture modifying agents. The product of the invention is suitable as a dairy-alternative product.

An essential part of the present invention is utilizing certain specific enzymes at the appropriate stage and in a controlled manner. In connection with the present invention, the inventors managed to control the reaction involved with enzyme treatment, so that the starch contained in the plant-based raw-material, used in the invention, gives the desired texture for the final plant-based product, even though a limited hydrolysis of the starch is performed. More specifically, the inventors have surprisingly found that if small portion of the amylopectin of the starch of the plant-based raw material is broken down by a starch degrading enzyme, a suspension comprising partly hydrolyzed starch may be obtained, which can be processed with a traditional production line for dairy-based product. In other words, the hydrolysis of the starch is carried out only enough to avoid cuttability in the texture of the plant-based product. Still, the starch particles are not broken down too much, so they still give texture and viscosity to the product.

The invention thus utilizes limited hydrolyzation of starch. In addition, if the raw material contains beta-glucan, such as oats, the main portion of the native beta-glucan contained in the plant-based raw material needs to be broken down by a beta-glucan degrading enzyme. The enzyme treatments need to be performed before heating the raw material mixture above 80°C.

Thus, the present invention concerns a process for producing a plant-based food product, which process comprises the steps of:
a. providing a suspension comprising starch and optionally protein by mixing water and at least one plant-based raw material containing native starch and optionally protein,
b. heating said suspension to obtain a warm suspension, with a temperature of 50 to 70°C, preferably 55 to 65°C, more preferably 58 to 62°C,
c. preparing a suspension comprising partly hydrolyzed starch having a degree of polymerization value of more than 10,000, but not more than 60,000, comprising no more than 0.05 wt.% small sugar molecules glucose, maltose, and maltotriose by treating said warm suspension with at least one starch degrading enzyme to obtain a suspension comprising partly hydrolyzed starch,
d. subjecting said suspension comprising partly hydrolyzed starch to heat treatment to obtain a heat-treated suspension comprising partly hydrolyzed starch,
e. cooling said heat-treated suspension comprising partly hydrolyzed starch,
f. fermenting and/or acidifying the suspension obtained in step e., by adding at least one starter culture to the suspension and fermenting the mixture until it reaches a pH value of 4 to 4.9, preferably 4.5, to obtain a fermented plant-based food product, and optionally further cooling and/or adding jam, beta-glucan, flavoring and/or additives to said suspension, and
g. obtaining a plant-based food product.

A plant-based product is obtained with the described process.

Thereto, the present invention concerns a plant-based food product, which comprises partly hydrolyzed starch, which has been obtained by limited hydrolysis, which starch has a DP (degree of polymerization) value of more than 10,000, but not more than 60,000, such that the starch stabilizes the texture of the plant based product and prevents cuttability in the product texture, wherein said plant-based food product comprises no more than 0.05 wt.% small sugar molecules glucose, maltose, and maltotriose. The plant-based product comprises no more than 0.3 wt.% native beta-glucan based on the total weight of the plant-based food product.

The present invention also concerns use of limited hydrolysis of starch for manufacturing a plant-based food product, wherein native starch contained in plant-based raw material is partly hydrolyzed with an enzyme, which is selected from the group consisting of alfa-amylase, beta-amylase, pullulanase, and fungal alfa-amylase, preferably fungal alfa-amylase, wherein partly hydrolyzed starch has a degree of polymerization value of more than 10,000, but not more than 60,000 and comprises no more than 0.05 wt.% small sugar molecules glucose, maltose, and maltotriose.

One advantage with the plant-based products of the present invention is that the viscosity, texture and composition of the obtained products are very similar to corresponding dairy-based products. Also, the nutritional values may be similar or close to those in corresponding dairy-based products. Thus, the product is suitable as an alternative product for fermented, acidified or non-acidic (neutral) dairy-based products.

The characteristic features of the invention are defined in the appended claims.

### BRIEF DESCRIPTION OF THE DRAWINGNS

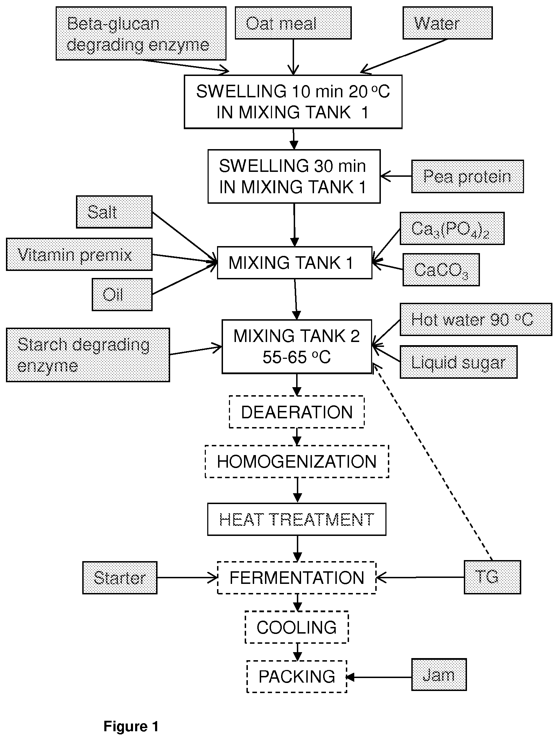

**Figure 1** is an example of a process scheme illustrating the process of the invention.

### DEFINITIONS

In the present description and claims, the following words and expressions have meanings as defined below:
A "starter culture" is a microbiological culture, which performs fermentation. The starters usually consist of a cultivation medium, such as nutrient liquids that have been well colonized by the microorganisms used for the fermentation.

A "plant-based food product" may refer to fermented, acidified or non-acidic (neutral) food products, such as traditional dairy-based products like yoghurt, drinkable yoghurt, crème fraiche or sour cream, sour milk, quark, cream cheese (Philadelphia-type soft cheese), set-type yoghurt, smoothie or pudding.

"Plant-based" refers to originating from plants, which are suitable for manufacturing edible food products in food technology application. "The plant-based raw material" suitable for the product and process of the present invention may be at least one selected from: cereal, oat, barley, wheat, rye, rice, corn, buckwheat, millet, soy, starches, beta-glucans, mucilages, flax, mushrooms, hemp, peas, lentils, tubers, fruits, berries, and press cakes from oil containing plants and seeds, or waxy cereals, waxy oat, waxy barley, waxy wheat, waxy rye, waxy rice, or waxy corn. Almost all of the starch in so called "waxy varieties" is amylopectin, whereas in "normal varieties" about 80 wt.% of the starch is amylopectin and 20 wt.% is amylose.

"Limited hydrolysis" refers to treating a raw material comprising native starch with at least one starch degrading enzyme, which preferably is selected from alfa-amylase, beta-amylase, pullulanase and fungal alfa-amylase. Fungal alfa-amylase is for example produced by an *Aspergillus oryzae* strain. An example of such fungal alfa-amylase is Mycolase. Mycolase is a tradename for fungal alfa-amylase produced by an *Aspergillus oryzae* strain (commercially available via DSM). The limited hydrolysis is performed in order to partly hydrolyze the amylopectin of the starch, but without breaking it down to small sugar molecules, such as maltose and maltotriose. "Limited hydrolysis" is also referred to as "partial hydrolysis". In the present disclosure limited hydrolysis is performed so that starch is degraded to obtain a DP value of more than 10,000, but below 60,000.

"Degree of polymerization" refers to the number of monomer units in a macromolecule or polymer or oligomer molecule. In the present disclosure "degree of polymerization" refers to the number of glucose molecules in a starch polymer.

"A suspension comprising partly hydrolyzed starch" refers to a suspension based on starch containing plant-based raw material, which suspension comprises partly hydrolyzed starch, which partly hydrolyzed starch has been obtained by enzyme treatment by at least one starch degrading enzyme. It is also essentially free from native beta-glucan, so that the content is no more than 0.3 wt.% based on the total weight. Thus, if required, the suspension has been treated with at least one beta-glucan degrading enzyme.

"Native beta-glucan" thus refers to beta-glucan, which originates from the raw-material and which beta-glucan has not been enzymatically broken down.

### DETAILED DESCRIPTION OF THE INVENTION

The inner part of grains, seeds, roots and fruit, or other suitable plant-based raw material for food production, are mainly composed of starch and proteins, and cell wall polysaccharides and fats. Some plants, such as oat and barley, also contain a certain soluble fiber; beta-glucan (P-glucan). This is a water-soluble fiber, which absorbs water forming a very viscous texture (even in cold water). The structure of starch is a particle (1-100 µm), which does not dissolve in cold water. There are two main glucose-based polymers in starch; amylose and amylopectin (20:80). These two polymers are arranged in the starch particle, so that they form a partly crystalline structure. The structure can be broken by heating starch in water. At 55-75°C the starch particles absorb water and the particle size increases. However, the structure is not broken, and this effect is reversible. When the temperature reaches 80-95°C, the structure will be permanently destroyed, and so-called gelatinization occurs. The viscosity of the liquid will increase considerably. This phenomenon is utilized when producing food products like pudding, porridge, sauce, jams, sweets and bread.

Polysaccharide degrading enzymes are commonly used in various processes for preparing food products. Enzymes are fast and substrate specific. The main polysaccharide in plants, for example cereal and leguminous plants, is starch. Traditionally, the enzyme treatment of starch is performed after heat treatment and break down of the structure. Thereby, starch will be transformed into mainly glucose, maltose, maltotriose or maltodextrins depending on the enzyme. The enzymes that break down starches are amylases. The preferred conditions depend on the amylase type, such as certain temperature and pH values. The temperature may be around 4-95°C and pH around 3-8.

The present invention relates to a process, which utilizes limited enzymatic hydrolyzation of starch.

Thus, the present invention concerns a process for producing a plant-based food product, wherein the process comprises the steps of:
a. providing a suspension comprising starch and optionally protein by mixing water and at least one plant-based raw material containing native starch and optionally protein,
b. heating said suspension to obtain a warm suspension, with a temperature of 50 to 70°C, preferably 55 to 65°C, more preferably 58 to 62°C,
c. preparing a suspension comprising partly hydrolyzed starch having a degree of polymerization value of more than 10,000, but not more than 60,000, comprising no more than 0.05 wt.% small sugar molecules glucose, maltose, and maltotriose by treating said warm suspension with at least one starch degrading enzyme to obtain a suspension comprising partly hydrolyzed starch,
d. subjecting said suspension comprising partly hydrolyzed starch to heat treatment to obtain a heat-treated suspension comprising partly hydrolyzed starch,
e. cooling said heat-treated suspension comprising partly hydrolyzed starch,
f. fermenting and/or acidifying the suspension obtained in step e. by adding at least one starter culture to the suspension and fermenting the mixture until it reaches a pH value of 4 to 4.9, preferably 4.5, to obtain a fermented plant-based food product, and optionally further cooling and/or adding jam, beta-glucan, flavoring and/or additives to said suspension, and
g. obtaining a plant-based food product.

According to one embodiment the present disclosure concerns a process for producing a plant-based food product, wherein the process comprises the steps of
a. providing a suspension comprising starch and optionally protein by mixing water and at least one plant-based raw material containing starch and optionally protein, wherein the temperature of the suspension is between 5 and 42°C, preferably between 5 and 30°C, more preferably between 5 and 20°C,
b. adding hot water to said suspension to obtain a warm suspension, with a temperature of 50 to 70°C, preferably 55 to 65°C, more preferably 58 to 62°C,
c. preparing a suspension comprising partly hydrolyzed starch by treating said warm suspension with at least one starch degrading enzyme to obtain a suspension comprising partly hydrolyzed starch,
d. subjecting said suspension comprising partly hydrolyzed starch to heat treatment to obtain a heat-treated suspension comprising partly hydrolyzed starch,
e. cooling said heat-treated suspension comprising partly hydrolyzed starch,
f. optionally fermenting and/or acidifying the suspension obtained in step e., and optionally further cooling and/or adding jam, beta-glucan, flavoring and/or additives to said suspension, and
g. obtaining a plant-based food product.

The above-mentioned steps a. to g. are performed in succession.

In step a., when the suspension is prepared, the temperature preferably does not exceed about 42°C, because if the temperature is too high a proper suspension may not be formed. The temperature of the suspension is preferably between 5 and 42°C, more preferably between 5 and 30°C, more preferably between 5 and 20°C. In the next stage, the suspension is heated to a suitable temperature of the limited hydrolysis reaction.

According to one embodiment, the warm suspension contains 3 to 30 wt.% starch, preferably 4 to 20 wt.% starch, more preferably 4 to 12 wt.% starch, such as 5 to 10 wt.% or 6 to 11 wt.% starch. The starch content in the limited hydrolysis step should not be too high, because it may clog the production lines. If a traditional production line for dairy-based products is not used, higher amounts may be used.

According to one embodiment, the plant-based raw material is oat.

The first suspension in step a. may contain about 5 to 50 wt.%, preferably 20 to 50 wt.%, more preferably 25 to 30 wt.% plant-based raw material, for example oat. The suspension in step a. typically comprises totally about 1 to 40 wt.%, preferably 3 to 40 wt.%, more preferably 3 to 20 wt.%, even more preferably 4.5 to 10 wt.% protein, such as 5 to 8 wt.% or 6 to 9 wt.% protein. If the plant-based raw-material is oat, about 60 to 100 wt.% of the proteins are proteins contained in the oat raw material, and 0 to 40 wt.% are added protein, for example pea protein. If other plant-based raw materials are used, other proportions of added protein may be required depending on the protein content in the raw material itself and depending on the desired protein content of the plant-based product.

The total starch content of the suspension in step a. is typically about 3 to 30 wt.%, preferably 8 to 30 wt.%, more preferably 15 to 20 wt.% starch, such as 16 to 19 wt.% or 17 to 18 wt.% starch. The amounts may be adjusted as desired.

Heating in step b. may be carried out by heating the suspension obtained in step a., by adding hot water to the suspension, or by using conventional techniques known in the art, such as a plate heat exchanger, tubular heat exchanger or jacket. If heating is carried out with a plate heat exchanger or tubular heat exchanger, the suspension is warmed to a desired temperature while it is run through the equipment. Temperature of a suspension comprising starch may preferably be over 58°C for maximum of 30 minutes before adding starch degrading enzyme.

The suspension obtained in step a. may be called a premix. The premix suspension may be diluted with water by adding hot water in step b. For example, dilution may be in the proportions 1 part suspension and 1 part water, or 1 suspension and 2 parts water, or 1 part suspension and 3 parts water. Depending on the volume of the production batch the addition of hot water may last several hours. After the addition of essentially all the hot water starch degrading (hydrolyzing) enzyme is added within 0 to 30 minutes.

The suitable temperature of the cooling step e. depends on if fermentation or acidification is performed or not. If fermentation is not performed, the suitable cooling temperature is 5 to 45 °C. If fermentation is performed, the suitable cooling temperature depends on the starter culture. For example, 38 to 45 °C for thermophilic cultures and for example 28 to 32 °C for mesophilic cultures. Other temperatures may also be suitable.

According to one embodiment of the invention, said plant-based raw material comprises beta-glucan, and the process further comprises a step of treating the suspension in step a. or step b. with at least one beta-glucan degrading enzyme, to obtain a suspension essentially free from native beta-glucan, so that the content of native beta-glucan originating from the plant-based raw material will be less than 0.3 wt.% based on the total weight of the plant-based food product.

According to one embodiment of the invention, the beta-glucan degrading enzyme is beta-glucanase, preferably fungal beta-glucanase. Preferably, the fungal beta-glucanase is derived from a strain of *Talaromyces emersonii.* One commercially available beta-glucanase derived from a selected strain of *Talaromyces emersonii* is Filtrase (DSM).

According to another embodiment of the invention, the plant-based raw material does not comprise beta-glucan.

According to one embodiment of the invention, the starch degrading enzyme is selected from the group consisting of alfa-amylase, beta-amylase, pullulanase and fungal alfa-amylase, preferably fungal alfa-amylase. Fungal alfa-amylase has proved to function well for limited hydrolysis in tests performed in connection with the present invention.

The plant-based raw material used in the invention may be at least one selected from the group consisting of plant-based cereal, oat, barley, wheat, rye, rice, corn, buckwheat, millet (hirs), soy, starches, beta-glucans, mucilages, flax, mushrooms, hemp, peas, lentils, tubers, fruits, berries, and press cakes from oil containing plants and seeds, or waxy cereals (waxy oat, waxy barley, waxy wheat, waxy rye), waxy rice, or waxy corn. Preferably, the plant-based raw material comprises cereal, more preferably oat. The raw material in the process of the present invention contains native amylopectin. According to one embodiment, the raw material contains native starch (which usually contains about 80% amylopectin and about 20% amylose). According to another embodiment, the raw material is a so called waxy species, wherein almost all the starch is native amylopectin. Chemically (for example with acids or enzymes) or physically (for example mechanically or by heat) modified starches are not suitable for the process of the invention, such as pre-gelatinized starches or hydrolyzed starches (by acid or enzymes). Suitably, the plant-based product of the invention is a plant-based dairy-alternative product.

The raw material in step a., when providing a suspension of at least one plant-based raw material containing starch, is typically a meal or in powder form. The particle size of the powder is typically in the range of 5 to 300 µm, preferably 10 to 275 µm. Meal, especially oat-meal, preferably has a particle size with a D90 value of 150 µm, i.e. 90% of the particles are smaller than 150 µm. In one embodiment, 100% of the particles have a particle size below 275 µm. In one embodiment, 90% of the particles have a particle size below 150 µm and in one embodiment, 50% of the particles have a particle size below 10 µm. It is also important, that the starch structure contained in the raw material is not damaged in a way that will prevent the starch degrading enzyme from working. Also, if the particle size of the powder is too big, the enzyme may not be able to degrade starch effectively enough. The appropriate particle size will also ensure processability of the powder and the suspension formed in step a. of the process. The powder should not form lumps, because that would cause problems in the production line and reduce the quality of the plant-based food product.

Thus, according to one embodiment, the plant-based raw material is in powder form. According to one embodiment of the process of the invention, the plant-based raw material is a powder having a particle size of 5 to 300 µm, preferably 10 to 275 µm. In one embodiment, 90% of the particles are smaller than 150 µm.

Other pre-treatment steps may be required or useful depending on the raw material.

According to one embodiment of the invention, the process comprises adding at least one starter culture to the suspension comprising partly hydrolyzed starch obtained in step e. and fermenting the mixture until it reaches a pH value of 4 to 4.9, preferably 4.5, to obtain a fermented plant-based food product.

Thus, according to one embodiment, the process of the invention comprises a fermentation step. The fermentation step produces an acidic fermented product. In the fermentation step of the process of the present invention, known cultures, such as conventional starter cultures for dairy-based products, may be used for inoculation of the mixture to be fermented. The bacteria may be mesophilic and/or thermophilic. Biological acidifiers, e.g. a bulk starter or DVS starter (direct to vat starter) may be used. The starter culture may be selected from the group consisting of *Streptococcus thermophilus, Lactobacillus bulgaricus, Lactobacillus acidophilus, Bifidobacteria, Lactobacillus rhamnosus, Lactobacillus casei, Lactococcus lactis, Leuconostoc citreum, Leuconostoc mesenteroides*/ *pseudomesenteroides, Leuconostoc mesenteroides, Lactobacillus plantarum, Lactobacillus amylolyticus, Lactobacillus amylovorus, Lactobacillus delbrueckii subsp. delbrueckii, Lactobacillus rhamnosus GG, Bifidobacterium animalis subsp. lactis ,* and *Lactobacillus acidophilus.* Preferably, the starter culture is selected from the group consisting of *Lactobacillus acidophilus, Bifidobacteria* and *Lactobacillus rhamnosus.* The fermentation is performed after the heat treatment step.

Exopolysaccharide producing strains are not required in the process according to the present invention. Thus, according to one embodiment, the process of the present disclosure does not involve using exopolysaccharide producing microbe strains. In other words, according to one embodiment, the process of the present invention comprises using microbe strains which do not produce exopolysaccharides.

According to one embodiment, the plant-based product of the invention comprises viable bacteria and/or probiotics.

According to one embodiment of the invention, step a. of the process further comprises adding sugar in an amount of 1 to 5 wt.%, preferably 2 to 4 wt.% based on the total weight of the suspension, and optionally other ingredients such as oil, salt, minerals, such as calcium carbonate and tricalcium phosphate, and vitamins.

According to one embodiment, a so called "swelling" step of the suspension is performed by letting the mixture stand. The swelling is typically performed after mixing the plant-based raw material and water in step a. and before optionally adding other ingredients. The suitable swelling time depends on the temperature of the suspension. The swelling time may be 30 min to 4 days. During the swelling, the meal and proteins of the raw material(s) in the suspension are hydrated.

According to one embodiment, the process comprises adding transglutaminase (TG) enzyme to the suspension in an amount of 0.1 - 5 u per 1 g protein, preferably 0.1 - 1 U per 1 g protein, more preferably 0.3 - 0.6 U per 1 g protein, most preferably 0.4 - 0.5 U per 1 g protein. If the plant-based product is fermented, the TG enzyme is preferably added before or at the same time as the starter culture. If the plant-based product is acidified, i.e. not fermented, the TG enzyme may be added after the heat-treatment and the cooling step. If the plant-based product is not acidified, the TG enzyme may also be added after adding the hot water before adding the starch degrading enzyme.

According to one embodiment of the invention, the warm suspension obtained in step b. comprises 3 to 30 wt.% starch, preferably 4 to 20 wt.% starch, more preferably 4 to 12 wt.% starch, such as 5 to 10 wt.% or 6 to 11 wt.% starch.

The present invention also relates to a plant-based food product obtained with the process according to any one of the embodiments of the invention.

The present invention also concerns a plant-based food product, which comprises partly hydrolyzed starch, which has been obtained by limited hydrolysis, which starch has a DP value of not more than 60,000 and said plant-based product comprises no more than 0.3 wt.% native beta-glucan based on the total weight of the plant-based food product. Preferably, said starch has a DP value of more than 10,000, but not more than 60,000. According to one embodiment, the plant-based food-product comprises oat.

According to one embodiment, the plant-based food product comprises no more than 0.05 wt.% small sugar molecules, such as no more than 0.01, 0.02, 0.03 or 0.04 wt.% small sugar molecules. Small sugar molecules are typically mono-, disaccharides or trisaccharides.

According to one embodiment, the molecular weight of the small sugar molecules is no more than 600 g/mol, or no more than 550 g/mol.

According to one embodiment, the plant-based food product is yoghurt, drinkable yoghurt, crème fraiche or sour cream, sour milk, pudding, set-type yoghurt, smoothie, quark, or cream cheese, preferably yoghurt.

The protein content of the plant-based product according to the invention is typically 0.5 to 20 wt. % based on the total weight of the product. The protein content may also be 0.5 to 12 wt.%, or 0.5 to 10 wt. %, or 1 to 8 wt. %, or 2 to 6 wt.% based on the total weight of the product. The protein content refers to the plant-based product before optional addition of jam or other constituents. It may thus also refer to the protein content after step d., when obtaining a suspension comprising partly hydrolyzed starch.

The present invention also relates to a suspension comprising partly hydrolyzed starch. The suspension is based on starch containing plant-based raw material and it comprises partly hydrolyzed starch, which has been obtained by limited hydrolysis. Thereto, it comprises no more than 0.3 wt.% native beta-glucan based on the total weight of the suspension comprising partly hydrolyzed starch. Native beta-glucan refers to beta-glucan originating from the raw material, and which has not been enzymatically broken down by a beta-glucan degrading enzyme.

According to one embodiment, the partly hydrolyzed starch has a DP (degree of polymerization) value of not more than 60,000. Preferably, partly hydrolyzed starch has a DP value of more than 10,000, but more than 60,000.

According to one embodiment, the suspension comprising partly hydrolyzed starch comprises no more than 0.05 wt.% small sugar molecules, such as no more than 0.01, 0.02, 0.03 or 0.04 wt.% small sugar molecules. Small sugar molecules are typically mono-, disaccharides or trisaccharides. Sugar levels may for example be measured by Dionex ICS-3000 by Colon CarboPac PA1.

In addition, the present invention concerns use of limited hydrolysis of starch for manufacturing a plant-based food product, wherein native starch contained in plant-based raw material is partly hydrolyzed with an enzyme, which is selected from the group consisting of alfa-amylase, beta-amylase, pullulanase and fungal alfa-amylase. Preferably fungal alfa-amylase, such as commercially available Mycolase, is used.

According to one embodiment, the native starch is hydrolyzed prior to heating a suspension comprising the plant-based raw material to a temperature above 80°C.

According to one embodiment, the plant-based product and/or the suspension comprising partly hydrolyzed starch of the invention does not contain any soy based raw material. According to one embodiment, the plant-based product of the invention does not contain any dairy-based raw material. According to one embodiment, the plant-based product of the invention does not contain any animal-based raw material. Animal-based/dairy-based raw materials include ingredients like lactose, casein, whey protein, milk fats. "Animal-based" also relates to raw material of other origins than dairy.

The plant-based raw material comprises starch and optionally beta-glucan. If the raw material comprises beta-glucan, a beta-glucan degrading enzyme is required. If the raw material contains beta-glucan (for example oat or barley), the forming of lumps can be reduced by breaking down large beta-glucan molecules to smaller molecules by beta-glucan degrading enzyme, for example Filtrase enzyme. Otherwise beta-glucan will dissolve into the aqueous solution forming a thick viscous gel, which cannot be processed further in a conventional line for producing food products such as yogurt. The smaller beta-glucan molecules will not form sliminess. Beta-glucan will thus be left in the suspension after the enzyme treatment, but as smaller molecules. The enzyme treatment is suitably performed in connection with forming the suspension in step a. Preferably, the enzyme is added to water before the plant-based raw material but may also be added later. In any case, the treatment with beta-glucan degrading enzyme needs to be performed before the limited hydrolysis step.

An essential part of the beta-glucan needs to be broken down before heating the suspension to temperatures above 42°C. The beta-glucan degrading enzyme may be selected from the group consisting of beta-glucanase, and fungal beta-glucanase. Beta-glucanase is active in a temperature range of 5 to 95°C. Preferably fungal beta-glucanase, such as Filtrase is used.

Filtrase is active in a temperature range of 5 to 65°C. Preferably, a range of 5°C to 20°C, or 10 to 20°C is used. The reaction time for this step is usually from 30 min to 3 days. The reaction time may depend on the reaction temperature. However, usually around 30 min is enough for both cold and warm temperatures. The amounts of the beta-glucan degrading enzyme may be for example 0.1 to 0.5 wt.% of the plant-based raw material, or 3 to 5 wt.% of the beta-glucan. For example, if the plant-based raw material is oat, and Filtrase enzyme is used, the amount of Filtrase may be 0.18 wt.% based on the amount of oat, or 4 wt.% based on the amount of beta-glucan. The amount of required enzyme depends on the enzyme to be used. The molecular weight of native beta-glucan is 2000 to 3000 kDa (Wood, 2011). The molecular weight of the degraded beta-glucan obtained in the process of the present invention depends on the reaction time of the enzyme treatment. According to one embodiment, the degraded beta-glucan has a molecular weight below 2,000 kDa. The molecular weight may also be below 1,000 kDa, or below 400 kDa, a molecular weight between 100-200 kDa is also possible. According to one embodiment, the molecular weight is no more than 10 kDa.

A starch degrading enzyme is always required in the process. This enzyme treatment step for said enzyme, such as alfa-amylase, beta-amylase or pullulanase, is very quick, about 1 to 30 min, preferably 1 to 10 min. However, the treatment may be continued longer, such as 180 min. The enzyme is inactivated when the mixture is heated to a temperature above 65°C, which stops hydrolyzation of the starch. Preferably, fungal alfa-amylase, such as Mycolase is used. Mycolase is active in a temperature range of 5 to 65°C. Preferably, a range of 60 to 63°C is used. At temperatures around 54 to 65°C, preferably from 60 to 63°C, the starch granule will swell enough to let the enzyme inside the starch granule.

The temperature and low amounts of enzyme are relevant to obtain the desired limited hydrolysis. Typically, the amounts of enzyme, such as alfa-amylase or fungal alfa-amylase, for example Mycolase may be 0.0000001 - 0.001 wt.% based on the total weight of the suspension, preferably 0.000001 - 0.001 wt.%, more preferably 0.00005 - 0.001 wt.%, more preferably 0.00025 - 0.0005 wt.% based on the total weight of the suspension. In one embodiment, the amounts of fungal alfa-amylase, such as Mycolase may be 0.00083 - 0.006 wt.%, preferably 0.0042 - 0.0083 wt.% based on the amount of starch. The amount of enzyme depends on the process conditions. Typically, the amount of beta-amylase may be 0.0000001 - 0.001 wt.%, preferably 0.000001 - 0.001 wt.%. Typically, the amount of pullulanase is 0.0000001 - 0.001 wt.%, preferably 0.000001 - 0.001 wt.%.

It is essential for the present invention that the starch degrading enzyme functions in a controlled manner. The invention requires that the starch is only partly hydrolyzed. Thus, the process of the present invention comprises controlled limited hydrolysis of starch. The process of the present invention does not involve gelatinization of the native starch. Hydrolysis is performed to a starch granule, which is neither in native form nor gelatinized, but swollen.

The obtained DP (degree of polymerization) value of starch is relevant for the limited hydrolysis. If the starch has a DP value of 60,000 or higher, the product may form a gel with cuttability. According to the present invention, the limited hydrolysis is performed so that starch is degraded to obtain a DP value below 60,000. Preferably, DP value is, however, more than 10,000. One theory is that the limited hydrolysis may prevent retrogradation, so that the structure of the starch gel remains amorphic. Thus, the starch granules will remain swelled. Molecular weight distributions of starch may for example be analyzed by SEC-HPLC with the column combination µHydrogel 2000, 500 and 250.

When starch is broken down, glucose, maltose and maltotriose are usually obtained. However, tests performed in connection with the present invention (Examples 1 and 2) showed that none of these were present in the plant-based food products in any significant amounts. Consequently, starch was not broken down to small sugar molecules in the Mycolase treatment. Thus, the enzyme treatment according to the invention only breaks down starch partly, in such a degree that the starch still stabilizes the texture of the plant-based food product and prevents cuttability in the product texture. If the starch molecules would be more broken down, maltose and maltotriose would be present in higher amounts in the plant-based food product and the product would no longer have a gel-like texture, i.e. starch would not bring stability and improve the texture of the plant-based food product.

According to one embodiment, the plant-based product does not contain small sugar molecules such as glucose, maltose, maltotriose, which originate from the starch contained in the plant-based raw material. In other words, these are not formed in the treatment with the starch degrading enzyme. Also, these are not formed in case of treatment with a beta-glucan degrading enzyme.

Sugar, such as sucrose (saccharose), glucose, fructose, galactose, is typically added to the raw material suspension. The fermentation culture uses part of the sucrose in the fermentation process, whereby fructose is formed. If glucose is present, it is also converted during the fermentation step. If the plant-based raw material contains beta-glucan, it will be enzymatically broken down in the process according to the invention to form mainly smaller beta-glucan molecules.

The limited hydrolysis of starch of the process according to the present disclosure, provides a stable texture and appropriate viscosity, typically 50 to 5000 mPas, to the plant-based food product.

The viscosity of the plant-based product of the disclosure depends on its intended end use or product category and is typically between 50 and 5000 mPas. If the product is a drinkable yoghurt, the suitable viscosity is around 50 to 250 mPas. If the product is a spoonable yoghurt product, the suitable viscosity is around 300 to 1000 mPas. If the product is a crème cheese or quark product, the suitable viscosity is around 1000 to 5000 mPas. The viscosity may be measured with the apparatus Vibroviscometer SV10, Japan.

These viscosities concern the viscosity of the product before optional addition of jam or other optional additional ingredients. This abolishes the need to use additives, such as thickening agents or other texture modifying agents, because the desired texture can be obtained without such additives.

The present disclosure also concerns use of transglutaminase enzyme in plant-based food preparations for reducing shear-thinning properties. Reducing shear-thinning properties is an advantage, because the product will have better stability during mixing or agitation.

Transglutaminase enzyme may be added to the suspension comprising partly hydrolyzed starch. The transglutaminase enzyme is suitably added before the optional fermentation step, and after the heat treatment step. The transglutaminase may be added before the starter culture is added or together with the starter culture. Transglutaminase is active in a temperature range of 5 to 70°C. Thus, it is active during the fermentation step. Preferably, a range of 30 to 50°C, more preferably 35 to 45°C is used. The transglutaminase enzyme catalyzes the formation of a bond between a lysine and glutamine groups in proteins or peptides. Thus, transglutaminase will form protein networks in the product, which improve the texture of the product by increasing viscosity of mixture. By utilizing transglutaminase enzyme in the process, the need to add additives such as thickening agents can be reduced. The need for transglutaminase depends on which starch containing raw material is used. An appropriate viscosity may be achieved also without using transglutaminase enzyme.

The traditional line for manufacturing fermented dairy products, such as yoghurt, comprises several attached apparatuses, which form different units. The first unit is a mixing tank, wherein the desired raw material composition is provided. Typically, the dry-matter content of this mixture is 10-15 % and comprises proteins, carbohydrates and fats. In the next step, the liquid is transferred to the heat treatment unit (72-95°C/ 30s.-3min). The heat-treated pasteurized warm mixture is usually also homogenized at 100-400 bar. After this, the mixture is transferred to the cooling unit (20-25°C) and moved to a tank. Starter cultures are added, and the mixture is fermented to pH 4.5 - 4.9. The fermented mixture is then transferred from the tank via a cooling unit to the packing unit.

In the process, according to the present invention, conventional deaeration, homogenization and heat-treatment equipment and conditions are used. Thus, in the deaeration step a temperature of between 75 to 85°C, preferably around 80°C, may be used. In the homogenization step, a pressure of 100 to 400 bar or 150 to 300 bar, preferably 200 bar, may be used. In the heat treatment step, a temperature of 80 to 95°C, preferably around 85°C, for a time of 1 min to 15 min, may be used. In the heat treatment, the starch degrading enzyme will be inactivated, and the starch grain will swell. If a traditional process line for dairy-based products (such as yoghurt) is not used, the heat treatment may be performed with for example a surface scrape heat exchanger, a plate heater, a tubular heat exchanger or a cooking kettle. Also microwave treatment, high pressure treatment, or cavitation may be used for the heat treatment step.

The process of the present invention may comprise an evaporation i.e. deaeration step. The deaeration step will remove air from the suspension, which is mixed into the suspension during mixing in the mixing tanks. The process according to the invention may also comprise a homogenization step.

In the end of the process, the obtained plant-based food product is typically packed and cooled to a storage temperature of 2 to 6°C.

According to one embodiment of the invention, the process comprises acidification by chemical means. In that case, the suspension comprising partly hydrolyzed starch is acidified by adding a chemical acidifier or organic or inorganic acids. In one embodiment, the acidifier is a chemical acidifier such as glucono-delta-lactone, sodium citrate, lactic acid, hydrochloric acid, citric acid, acetic acid or a combination of different acids. If the product is chemically acidified, the acidifier may be added after the heat treatment step. The acidifier may not be added before the limited-hydrolysis step, because it could affect the enzyme treatment.

According to another embodiment, the process of the present invention does not involve a fermentation nor an acidification step. In other words, the product of the invention is non-acidified or neutral.

Suitable proteins, which may be used in the product of the present invention are for example potato protein, pea protein, flax protein, hemp protein, mycoprotein, berry protein, cereal protein, rice protein, lentil protein, soy protein, corn protein, worm protein, algae protein, or collagen.

If desired, beta-glucan may be added to the product in the end-stage. Beta-glucan has several health benefits, so it may be desired to add beta-glucan to the product, for example in an amount between 0.3 to 1.0 wt.%. The beta-glucan may be added after the optional fermentation step. For example, it may be added together with the jam, if jam is added.

The final form of the product of the invention can vary, it can be stirred or set type, spoonable, foam, mousse or liquid type drinkable and flavored or non-flavored.

According to one embodiment, the plant-based product of the present invention is a plant-based dairy-alternative product. Preferably, in a dairy-alternative product, the viscosity, texture and composition are very similar to corresponding dairy-based products. Also, the nutritional values may be similar or close to those in corresponding dairy-based products. The plant-based product of the invention may be a fermented, acidified or non-acidic (neutral) dairy-alternative product.

Figure 1 illustrates one embodiment of the process according to the invention, where oat is used as the plant-based raw material. The optional steps are marked with a dash-line. The oat meal used in this example could be any other suitable meal or powder. The pea protein could also be any other suitable protein. In the mixing tank 2, at least starch degrading enzyme and hot water is added, and the other ingredients if necessary. Typically, the starch degrading enzyme is added last. Liquid sugar may be for example sucrose, glucose, fructose, or galactose. TG enzyme may or may not be added. If TG is added and no fermentation is performed, the TG enzyme is typically added to mixing tank 2 before adding starch degrading enzyme. Fermentation is not necessary and may also be exchanged to acidification. Jam may or may not be added at the packing stage.

In connection with the present invention, it was noted that when studying the starch grains of the partly hydrolyzed starch through a microscope, the starch grains are swollen, but still the amylose and the amylopectin were not completely liberated from the grain. The structure is not completely homogenous, instead parts of starch grains can be observed through a microscope.

One advantage with the product and process of the present invention is that less additives are needed than in prior art processes. More specifically, there is no need to add stabilizers or consistency moderating additives, such as thickening agents, to the plant-based food product of the invention. The reason is the controlled, limited hydrolysis of the starch, which leaves an appropriate amount of starch in the plant-based food product to provide the desired viscosity and texture properties. The texture and mouth-feel resemble that of conventional dairy-based products, such as yogurt. In some of the prior art processes for treating cereal-based raw materials, a considerable part of the starch in the raw material is broken down and will not naturally thicken the formed product. Thus, a thickening agent, such as potato starch or pectin, may be needed to obtain the desired texture and viscosity. However, if jam is added to the product of the invention, the jam itself may contain a thickening agent.

Yet another advantage is that the product and process of the present invention provides a suspension comprising partly hydrolyzed starch, which is easily fermented by conventional starter cultures, which typically are used when manufacturing dairy-based yogurts. The mixture to be fermented should contain sugar, such as sucrose of glucose. Thus, sucrose is usually added to the mixture.

Other advantages related to the product of the present invention are that the texture of the product is not cohesive, slimy or gummy, and is not cuttable. In addition, if TG enzyme is used, the product does not show shear thinning properties, i.e. the TG enzyme improves agitation durability. The texture is also not viscoelastic, i.e. the form is not restored to its original form if changed. Cuttability may be measured using texture analyzing compression tests, or Txt apparatus.

The production process according to the present invention is simpler than many of the prior art processes for manufacturing plant-based dairy-alternative products because less pretreatment steps and less complex process equipment are needed. No filtration or fractionation steps are needed in the process like in some known processes.

The product according to the present invention also has a relatively long shelf life, i.e. good preservability, because syneresis does not occur. According to tests performed in connection with the present invention, the texture remained unchanged for 100 days at +4°C.

The present invention is further illustrated with the following examples.

### EXAMPLES

### Example 1

### Preparing a fermented plant-based product: Oat, pea protein, use of TG enzyme and living bacteria

An oat premix was prepared [water 1246 kg (15-20 °C), oat 498.5 kg and Filtrase (DMS) 2.54 kg]. The ingredients were mixed and left for swelling for 10 min. Pea protein, 54.63 kg (Pisane C9 or M9, Cosucra, Belgium) was added. The suspension was left for swelling during mixing for 30 min, until the viscosity had been reduced. Hot water was added (90 °C), 2410 kg. Addition of: salt 3.08 kg, vitamin premix 0.3 kg, oil 25 kg, calcium triphosphate 13.45 kg, calcium carbonate 4.3 kg. Liquid sugar (250 kg) was added as heated to 60 °C. Then water 500 kg (90 °C) was added, so that the temperature of the whole suspension reached 58-62 °C. Starch degrading enzyme was added, Mycolase (DSM), 15 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 and 161) was added to the container, totally 5 bags dissolved in 0.9 % brine (about 40 °C). Thereto, Transglutaminase enzyme, TG, (Ajinomoto Ltd, Japan) (0.5 U/g protein) was added. The viscosity of the mass was about 70-160 mPas. Pasteurization was run with speed 6000-7900 kg/h. Fermentation was continued to pH 4.4 - 4.57. The fermented mass was cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. Also, the microbes were well preserved in the product (1 x 10 ⁶ cfu/g). The obtained product had a viscosity of about 800 mPas (Vibroviscometer SV10, Japan). It was thick and did not show shear thinning properties.

### Example 2

### Sugar analysis

A fermented plant-based product was manufactured according to the process of Example 1 (two replicates: Product A and Product B). Sugar levels of fermented plant-based products manufactured according to the process of the present invention were measured by Dionex ICS-3000 by Colon CarboPac PA1. The results can be seen in Table 1. In addition, molecular weight distributions of starch were analyzed by SEC-HPLC with the column combination µHydrogel 2000, 500 and 250.

**Table 1. Sugar analysis results.**

| | **Glucose (g/100 g)** | **Fructose (g/100 g)** | **Sucrose (g/100 g)** | **Maltose (g/100 g)** | **Maltotriose (g/100 g)** |
|---|---|---|---|---|---|
| Product A | 0.03 | 0.13 | 2.36 | 0.02 | 0.01 |
| Product B | 0.03 | 0.15 | 2.99 | 0.02 | 0.01 |
| Product B without fermentation^{a} | 0.03 | 0.02 | 3.47 | 0.02 | 0.01 |
| Reference sample^{b} | 0.00 | 0.00 | 3.09 | 0.02 | 0.00 |

| | | | | | |
|---|---|---|---|---|---|
| ^{a)} After heat treatment, with starters, starter activity inhibited by Bronopol-addition. ^{b)} Same recipe as in Product B, but without oil and alfa-amylase, with beta-glucanase, no fermentation, premix (oat meal mixed with water) made previous day, gel prepared by heating at 87 °C for 5 min. | | | | | |

The DP values of starch measured from samples of Product A, Product B and Product B without fermentation were below 60,000, but more than 10,000. The DP value of starch measured from the reference sample was over 60,000.

Sucrose (saccharose) had been added to the raw material mixture in all tests in an amount of 3g/100g, i.e. 3 wt.%. The fermentation culture used part of the sucrose in the fermentation process, whereby fructose was formed.

As can be seen in the table, none of glucose, maltose and maltotriose were present in the plant-based food products A and B in any significant amounts. Consequently, starch was not broken down to small sugar molecules in the Mycolase (DSM) treatment. The DP values of starch measured from samples of Product A, Product B and Product B without fermentation were below 60000, but more than 10,000. Thus, the enzyme only broke down starch partly, in such a degree that the starch still stabilizes the texture and prevented cuttability. The texture of the plant-based food product resembled the texture of similar dairy-based yoghurt. The texture did not show cuttability.

### Example 3

### Preparing a fermented plant-based product: Oat and potato protein and living bacteria

An oat premix was prepared [water 1250 kg (15-20 °C), oat 450.6 kg and thermostable β-Glucanase 1 (Sigma Aldrich) 0.51 kg]. The ingredients were mixed and left for swelling for 10 min. After that 100 kg potato protein (e.g. Solanic 300 and 300 N, Avebe, NL) was added. The suspension was left for swelling during mixing for 30 min, until the viscosity was reduced. Hot water was added (90 °C) 2410 kg. Addition: salt 3.08 kg, vitamin premix 0.3 kg, oil 25 kg, calcium triphosphate 13.45 kg, calcium carbonate 4.3 kg. Liquid sugar was added (250 kg) heated to 60 °C. Then water 500 kg (90 °C) was added, so that the temperature of the whole mass reached 55 to 65 °C. Starch degrading enzyme was added, Mycolase (DSM), 12.5 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 and 161) was added to the container, totally 5 bags dissolved in 0.9 % brine (about 40 °C). Thereto, Transglutaminase enzyme, TG, (0.4 U/g protein) was added. The viscosity of the mass was about 70-160 mPas. Pasteurization was run with speed 6000-7900 kg/h. Fermentation was continued to pH 4.4 - 4.57 (goal 4.5). The fermented mass was cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. Also, the microbes were well preserved in the product (1 x 10 ⁶ cfu/g). The obtained product had a viscosity of about 800 mPas (Vibroviscometer SV10, Japan). It was thick and did not show shear thinning properties.

### Example 4

### Preparing a fermented plant-based product: Oat and potato protein, TG and dead bacteria

An oat premix was prepared [water 1248 kg (15-20 °C), oat 498.5 kg and beta-glucan degrading enzyme, 1.02 kg]. The ingredients were mixed and left for swelling for 10 min. Potato protein, 54.63 kg (e.g. Solanic 300 and 300 N, Avebe, NL) was added. The suspension was left for swelling during mixing for 30 min, until the viscosity had been reduced. Hot water was added (90 °C), 2410 kg. Addition of: salt 3.08 kg, vitamin premix 0.3 kg, oil 25 kg, calcium triphosphate 13.45 kg, calcium carbonate 4.3 kg. Liquid sugar (250 kg) was added as heated to 60 °C. Then water 500 kg (90 °C) was added, so that the temperature of the whole suspension reached 58-62 °C. Starch degrading enzyme was added, Beta-amylase from barley (Sigma Aldrich), 11.2 g, and Alfa-amylase from *Aspergillus oryzae* (Sigma Aldrich) 3.8 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 and 161) was added to the container, totally 5 bags dissolved in 0.9 % brine (about 40 °C). Thereto, Transglutaminase enzyme, TG, (Ajinomoto Ltd, Japan) (1 U/g protein) was added. The viscosity of the mass was about 70-160 mPas. Pasteurization was run with speed 6000-7900 kg/h. Fermentation was continued to pH 4.4 - 4.57. The fermented mass was after-pasteurized at 63 to 90 °C/ 30s. - 1 min and cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. The obtained product had a viscosity of about 800 mPas (Vibroviscometer SV10, Japan). It was thick and did not show shear thinning properties.

### Example 5

### Preparing a fermented plant-based product: Oat and pea protein, TG and dead bacteria

An oat premix was prepared [water 1247 kg (15-20 °C), oat 498.5 kg and Filtrase (DSM), 1.52 kg]. The ingredients were mixed and left for swelling for 10 min. Pea protein, 54.63 kg (e.g. Pisane C9 or M9, Cosucra, Belgia) was added. The suspension was left for swelling during mixing for 30 min, until the viscosity had been reduced. Hot water was added (90 °C), 2410 kg. Liquid sugar (250 kg) was added as heated to 60 °C. Then water 500 kg (90 °C) was added, so that the temperature of the whole suspension reached 58-62 °C. Starch degrading enzyme was added, beta-amylase from barley (Sigma Aldrich), 15 g, and Alfa-amylase from *Aspergillus oryzae* (Sigma Aldrich) 5 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 and 161) was added to the container, totally 5 bags dissolved in 0.9 % brine (about 40 °C). Thereto, Transglutaminase enzyme, TG, (0.3 U/g protein) was added. The viscosity of the mass was about 70-160 mPas. Pasteurization was run with speed 6000-7900 kg/h. Fermentation was continued to pH 4.4 - 4.57 (goal 4.5). The fermented mass was after-pasteurized at 63 to 90 °C/ 30s. - 1 min and cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. The obtained product had a viscosity of about 800 mPas (Vibroviscometer SV10, Japan). It was thick and did not show shear thinning properties.

### Example 6

### Preparing a plant-based product: Oat and pea protein, TG and chemical acidification

An oat premix was prepared [water 1246 kg (15-20 °C), oat 498.5 kg and Cellulase (endo-1,4-β-D-glucanase) produced in *Bacillus amyloliquefaciens* strain (Megazyme) 2.54 kg]. The ingredients were mixed and left for swelling for 10 min. Pea protein, 54.63 kg (e.g. Pisane C9 or M9, Cosucra, Belgia) was added. The suspension was left for swelling during mixing for 30 min, until the viscosity had been reduced. Hot water was added (90 °C), 2410 kg. Addition of: salt 3.08 kg, vitamin premix 0.3 kg, oil 25 kg, calcium triphosphate 13.45 kg, calcium carbonate 4.3 kg). Liquid sugar (250 kg) was added as heated to 60 °C. Then water 500 kg (90 °C) was added, so that the temperature of the whole suspension reached 55-65 °C. Starch degrading enzyme was added, Mycolase (DSM) 15 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container, and Transglutaminase enzyme, TG, (Ajinomoto Ltd, Japan) (0.1 U/g protein) was added. Chemical acidifier was added, GDL (glucono-delta-lactone 0.5-3 %). The viscosity of the mass was about 70-160 mPas. Pasteurization was run with speed 6000-7900 kg/h. Acidification was continued to pH 4.4 - 4.57. The acidified mass was cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. The obtained product had a viscosity of about 800 mPas (Vibroviscometer SV10, Japan). It was thick and did not show shear thinning properties.

### Example 7

### Preparing a fermented plant-based product: Oat and pea protein, and dead bacteria (no TG)

An oat premix was prepared [water 942 kg (15-20 °C), oat 550 kg and thermostable β-Glucanase 1 (Sigma Aldrich) 2,79 kg]. The ingredients were mixed and left for swelling for 10 min. Pea protein, 306.7 kg (e.g. Pisane C9 or M9, Cosucra, Belgia) was added. The suspension was left for swelling during mixing for 30 min, until the viscosity had been reduced. Hot water was added (90 °C), 2410 kg. Addition of: salt 3.08kg, vitamin premix 0.3 kg, oil 25 kg, calcium triphosphate 13.45 kg, calcium carbonate 4.3 kg). Liquid sugar (250 kg) was added as heated to 60 °C. Then water 500 kg (90 °C) was added, so that the temperature of the whole suspension reached 55-65 °C. Starch degrading enzyme was added, Mycolase (DSM) 27.5 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 ja 161) was added to the container, totally 5 bags dissolved in 0.9 % brine (about 40 °C). The viscosity of the mass was about 70-160 mPas. Pasteurization was run with speed 6000-7900 kg/h. Fermentation was continued to pH 4.4 - 4.57. The fermented mass was cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. Also, the microbes were well preserved in the product (1 x 10 ⁶ cfu/g). The obtained product had a thick structure and a viscosity of about 800 mPas (Vibroviscometer SV10, Japan).

### Example 8

### Preparing a fermented plant-based product: Rice and potato protein, TG and living bacteria

A rice premix was prepared [water 1249 kg (15-20 °C), rice meal 498.5 kg]. The ingredients were mixed and left for swelling 10 min. Potato protein, 54.63 kg (Solanic 300 and 300 N, Avebe, NL) was added. The suspension was left for swelling during mixing for 30 min, until the viscosity had been reduced. Hot water was added (90 °C), 2410 kg. Addition of: salt 3.08 kg, vitamin premix 0.3 kg, oil 25 kg, calcium triphosphate 13.45 kg, calcium carbonate 4.3 kg. Liquid sugar (250 kg) was added as heated to 60 °C. Then water 500 kg (90 °C) was added, so that the temperature of the whole suspension reached 58-62 °C. Starch degrading enzyme was added, Mycolase (DSM), 12.5 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 and 161) was added to the container, totally 5 bags dissolved in 0.9 % brine (about 40 °C). Thereto, Transglutaminase enzyme, TG, (Ajinomoto Ltd, Japan) (3 U/g protein) was added. The viscosity of the mass was about 70-160 mPas. Pasteurization was run with speed 6000-7900 kg/h. Fermentation was continued to pH 4.4 - 4.57. The fermented mass was cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. Also, the microbes were well preserved in the product (1 x 10 ⁶ cfu/g). The obtained product had a viscosity of about 800 mPas (Vibroviscometer SV10, Japan). It was thick and did not show shear thinning properties.

### Example 9

### Preparing a fermented plant-based product: Corn and potato protein, TG and dead bacteria

A corn premix was prepared [water 1249 kg (15-20 °C), corn meal 498.5 kg]. The ingredients were mixed and left for swelling for 10 min. Pea protein, 54.63 kg (e.g. Pisane C9 or M9, Cosucra, Belgia) was added. The suspension was left for swelling during mixing for 30 min, until the viscosity had been reduced. Hot water was added (90 °C), 2410 kg. Addition of: salt 3.08 kg, vitamin premix 0.3 kg, oil 25 kg, calcium triphosphate 13.45 kg, calcium carbonate 4.3 kg. Liquid sugar (250 kg) was added as heated to 60 °C. Then water 500 kg (90 °C) was added, so that the temperature of the whole suspension reached 58-62 °C. Starch degrading enzyme was added, Mycolase (DSM) 15 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 and 161) was added to the container, totally 5 bags dissolved in 0.9 % brine (about 40 °C). Thereto, Transglutaminase enzyme, TG, (Ajinomoto Ltd, Japan) (5 U/g protein) was added. The viscosity of the mass was about 70-160 mPas. Pasteurization was run with speed 6000-7900 kg/h. Fermentation was continued to pH 4.4 - 4.57. The fermented mass was after-pasteurized at 63 to 90 °C/ 30s. - 1 min and cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. The obtained product had a viscosity of about 800 mPas (Vibroviscometer SV10, Japan). It was thick and did not show shear thinning properties.

### Example 10

### Preparing a plant-based product, drinkable yoghurt: Oat, TG and living bacteria

An oat premix was prepared [water 1529 kg (15-20 °C), oat 270 kg and Filtrase (DMS) 1.37 kg]. The suspension was left for swelling during mixing for 30 min, until the viscosity had been reduced. Hot water was added (90 °C), 2410 kg. Addition of: salt 3.08kg, vitamin premix 0.3 kg, oil 25 kg, calcium triphosphate 13.45 kg, calcium carbonate 4.3 kg. Liquid sugar (250 kg) was added as heated to 60 °C. Then water 500 kg (90 °C) was added, so that the temperature of the whole suspension reached 58-62 °C. Starch degrading enzyme was added, Mycolase (DSM), 16.2 g. Directly thereafter pumping of the mass to the evaporator (deaeration) was started, 80-90 °C, and then further to pasteurization. The temperature was adjusted to 85-88 °C and duration 5 min. The warm mass was homogenized, 200 bar. Thereafter, the mass was directed to cooling (42 °C). The cooled mass was collected into a container and freeze-dried starter culture (Yo-Mix 205 and 161) was added to the container, totally 5 bags dissolved in 0.9 % brine (about 40 °C). Thereto, Transglutaminase enzyme, TG, (0.5 U/g protein) was added. The viscosity of the mass was below 70 mPas. Pasteurization was run with speed 6000-7900 kg/h. Fermentation was continued to pH 4.4 - 4.57. The fermented mass was cooled to 20 °C. The mass was packed as such, or for example with added (18%) flavors or jam. The products were packed and stored at a temperature from +2 to 8 °C. The texture of the product and the flavor were well preserved for at least 60 to 100 days. Water was not separated from the structure and the taste did not acidify during storage. Also, the microbes were well preserved in the product (1 x 10 ⁶ cfu/g). The obtained drinkable product had a viscosity of about 70 mPas (Vibroviscometer SV10, Japan) and did not show shear thinning properties.

### Example 11

### Reference example: Limited hydrolysis vs. "complete" hydrolysis

An oat-based product according to Example 1 was prepared (two replicates: Product A and Product B). In addition, an oat-based product according to Example 1 was prepared, but the amount of Mycolase was 500 g (two replicates: Product C and Product D).

Sugar levels of the fermented plant-based products manufactured according to the process of the present invention were measured by Dionex ICS-3000 by Colon CarboPac PA1.

The results can be seen in Table 2.

**Table 2. Sugar analysis results.**

| | **Glucose (g/100 g)** | **Fructose (g/100 g)** | **Sucrose (g/100 g)** | **Maltose (g/100 g)** | **Maltotriose (g/100 g)** |
|---|---|---|---|---|---|
| Product A | 0.03 | 0.13 | 2.36 | 0.02 | 0.01 |
| Product B | 0.03 | 0.15 | 2.99 | 0.02 | 0.01 |
| Product C | 0.03 | 0.001 | 0.09 | 0.88 | 1.13 |
| Product D | 0.03 | 0.001 | 0.09 | 0.91 | 1.19 |

As can be seen in the table, none of glucose, maltose and maltotriose were present in the plant-based food products A and B in any significant amounts. Consequently, starch was not broken down to small sugar molecules in the Mycolase (DSM) treatment. Thus, the enzyme only broke down starch partly, in such a degree that the starch still stabilizes the structure and prevented cuttability. The texture of the plant-based food product resembled the structure of similar dairy-based yoghurt. The texture did not show cuttability.

The texture of products A and B: The obtained product had a viscosity of about 800 mPas. It was thick and did not show shear thinning properties. The texture and flavor were well preserved. Water did not separate from the texture and the taste did not acidify during storage.

The texture of products C and D: The obtained product had a viscosity of about 10 mPas. The product was a liquid and had a thin texture. The amounts of maltotriose and maltose were clearly higher than the amounts in products A and B. The starch from the raw material had been broken down to smaller parts compared to products A and B and did no longer give structure to the obtained product.

## Claims

1. Process for producing a plant-based food product, **characterized in that** the process comprises the steps of
a. providing a suspension comprising starch and optionally protein by mixing water and at least one plant-based raw material containing native starch and optionally protein,
b. heating said suspension to obtain a warm suspension, with a temperature of 50 to 70°C, preferably 55 to 65°C, more preferably 58 to 62°C,
c. preparing a suspension comprising partly hydrolyzed starch having a degree of polymerization value of more than 10,000, but not more than 60,000, comprising no more than 0.05 wt.% small sugar molecules glucose, maltose, and maltotriose by treating said warm suspension with at least one starch degrading enzyme to obtain a suspension comprising partly hydrolyzed starch,
d. subjecting said suspension comprising partly hydrolyzed starch to heat treatment to obtain a heat-treated suspension comprising partly hydrolyzed starch,
e. cooling said heat-treated suspension comprising partly hydrolyzed starch,
f. fermenting and/or acidifying the suspension obtained in step e. by adding at least one starter culture to the suspension and fermenting the mixture until it reaches a pH value of 4 to 4.9, preferably 4.5, to obtain a fermented plant-based food product, and optionally further cooling and/or adding jam, beta-glucan, flavoring and/or additives to said suspension, and
g. obtaining a plant-based food product.

2. The process according to claim 1, **characterized in that** the temperature of the suspension in step a. is between 5 and 42°C, preferably between 5 and 30°C, more preferably between 5 and 20°C.

3. The process according to claim 1 or 2, **characterized in that** said plant-based raw material comprises beta-glucan, and that the process further comprises a step of treating the suspension in step a. or step b. with at least one beta-glucan degrading enzyme to obtain a suspension essentially free from native beta-glucan, so that the content of native beta-glucan originating from the plant-based raw material will be less than 0.3 wt.% based on the total weight of the plant-based food product.

4. The process according to claim 3, **characterized in that** the beta-glucan degrading enzyme is beta-glucanase, preferably fungal beta-glucanase.

5. The process according to claim 1 or 2, **characterized in that** the plant-based raw material does not comprise beta-glucan.

6. The process according to any one of the preceding claims, **characterized in that** the starch degrading enzyme is selected from the group consisting of alfa-amylase, beta-amylase, pullulanase and fungal alfa-amylase, preferably fungal alfa-amylase.

7. The process according to any one of claims 1, 2, 3, 4, or 6, **characterized in that** the plant-based raw material is selected from the group consisting of plant-based cereal, oat, barley, wheat, rye, rice, corn, buckwheat, millet, soy, starches, beta-glucans, mucilages, flax, mushrooms, hemp, peas, lentils, tubers, fruits, berries, and press cakes from oil containing plants and seeds, or waxy cereals, waxy oat, waxy barley, waxy wheat, waxy rye, waxy rice, or waxy corn, preferably cereal, more preferably oat.

8. The process according to any one of the preceding claims, **characterized in that** the plant-based raw material in step a. is in powder form, preferably having a particle size in the range of 5 to 300 µm, more preferably 10 to 275 µm.

9. The process according to any one of the preceding claims, **characterized in that** step a. further comprises adding sugar in an amount of 1 to 5 wt.%, preferably 2 to 4 wt.% based on the total weight of the suspension, and optionally other ingredients such as oil, salt, minerals, such as calcium carbonate and tricalcium phosphate, and vitamins.

10. The process according to any one of the preceding claims, **characterized in that** it further comprises adding transglutaminase enzyme to the suspension in an amount of 0.1 - 5 U per 1 g protein, preferably 0.1 - 1 U per 1 g protein, more preferably 0.3 - 0.6 U per 1 g protein, most preferably 0.4 - 0.5 U per 1 g protein.

11. The process according to any one of the preceding claims, **characterized in that** the warm suspension comprises 3 to 30 wt.% starch, preferably 4 to 20 wt.% starch, more preferably 4 to 12 wt.% starch.

12. A plant-based food product, **characterized in that** it comprises partly hydrolyzed starch, which has been obtained by limited hydrolysis, which starch has a DP (degree of polymerization) value of more than 10 000 but not more than 60,000, such that the starch stabilizes the texture of the plant based product and prevents cuttability in the product texture, wherein said plant-based food product comprises no more than 0.05 wt.% small sugar molecules glucose, maltose, and maltotriose, and that said plant-based product comprises no more than 0.3 wt.% native beta-glucan based on the total weight of the plant-based food product.

13. The plant-based food product according to claim 12, **characterized in that** the product comprises oat.

14. The plant-based food product according to claim 12 or 13, **characterized in that** the product is yoghurt, drinkable yoghurt, crème fraiche or sour cream, sour milk, pudding, set-type yoghurt, smoothie, quark, or cream cheese, preferably yoghurt.

15. The plant-based food product according to any one of claims 12 to 14, **characterized in that** the product further comprises viable bacteria and/or probiotics.

16. The plant-based food product according to any one of claims 12 to 15, **characterized in that** the product has a pH value of 4 to 4.9, preferably 4.5.

17. The plant-based food product according to any one of claims 12 to 16, **characterized in that** the product further comprises sugar in an amount of 1 to 5 wt.%, preferably 2 to 4 wt.% based on the total weight of the suspension, and optionally other ingredients such as oil, salt, minerals, such as calcium carbonate and tricalcium phosphate, and vitamins.

18. The plant-based food product according to any one of claims 12 to 17, **characterized in that** the product comprises protein 0.5 to 20 wt. % based on the total weight of the product, preferably 0.5 to 12 wt.%, or 1 to 8 wt. %, or 2 to 6 wt.% based on the total weight of the product.

19. Use of limited hydrolysis of starch for manufacturing a plant-based food product, wherein native starch contained in plant-based raw material is partly hydrolyzed with an enzyme, which is selected from the group consisting of alfa-amylase, beta-amylase, and pullulanase and fungal alfa-amylase, preferably fungal alfa-amylase, wherein partly hydrolyzed starch has a degree of polymerization value of more than 10,000, but not more than 60,000 and comprises no more than 0.05 wt.% small sugar molecules glucose, maltose, and maltotriose.

20. The use according to claim 19, **characterized in that** the native starch is hydrolyzed prior to heating a suspension comprising the plant-based raw material to a temperature above 80°C.

## Patentansprüche

1. Verfahren zur Herstellung eines pflanzenbasierten Lebensmittelprodukts, **gekennzeichnet dadurch, dass** das Verfahren die folgenden Schritte umfasst:
a. Bereitstellen einer Suspension, die Stärke und wahlweise Protein umfasst, durch Vermischen von Wasser und mindestens eines pflanzenbasierten Rohstoffs, der native Stärke und wahlweise Protein enthält,
b. Erwärmen der Suspension, um eine warme Suspension mit einer Temperatur von 50 bis 70 °C, bevorzugt 55 bis 65 °C, bevorzugter 58 bis 62 °C, zu erhalten,
c. Herstellen einer Suspension, die teilhydrolysierte Stärke mit einem Polymerisationsgradwert von mehr als 10.000, aber nicht mehr als 60.000 umfasst und nicht mehr als 0,05 Gew.-% der kleinen Zuckermoleküle Glucose, Maltose und Maltotriose umfasst, durch Behandeln der warmen Suspension mit mindestens einem stärkeabbauenden Enzym, um eine teilhydrolysierte Stärke umfassende Suspension zu erhalten,
d. Unterziehen der teilhydrolysierte Stärke umfassenden Suspension einer Wärmebehandlung, um eine wärmebehandelte teilhydrolysierte Stärke umfassende Suspension zu erhalten,
e. Abkühlen der wärmebehandelten teilhydrolysierte Stärke umfassenden Suspension,
f. Fermentieren und/oder Ansäuern der in Schritt e. erhaltenen Suspension durch Hinzufügen mindestens einer Starterkultur zur Suspension und Fermentieren des Gemischs, bis es einen pH-Wert von 4 bis 4,9, bevorzugt 4,5, erreicht, um ein fermentiertes pflanzenbasiertes Lebensmittelprodukt zu erhalten, und wahlweise weiteres Abkühlen und/oder Hinzufügen von Konfitüre, Beta-Glucan, Aromastoffen und/oder Zusatzstoffen zu der Suspension, und
g. Gewinnen eines pflanzenbasierten Lebensmittelprodukts.

2. Verfahren nach Anspruch 1, **gekennzeichnet dadurch, dass** die Temperatur der Suspension in Schritt a. zwischen 5 und 42 °C, bevorzugt zwischen 5 und 30 °C, bevorzugter zwischen 5 und 20 °C beträgt.

3. Verfahren nach Anspruch 1 oder 2, **gekennzeichnet dadurch, dass** der pflanzenbasierte Rohstoff Beta-Glucan umfasst und dass das Verfahren ferner einen Schritt umfasst, bei dem die Suspension in Schritt a. oder Schritt b. mit mindestens einem Beta-Glucan abbauenden Enzym behandelt wird, um eine Suspension zu erhalten, die im Wesentlichen frei von nativem Beta-Glucan ist, so dass der Gehalt des aus dem pflanzenbasierten Rohstoff stammenden nativen Beta-Glucan weniger als 0,3 Gew.-%, bezogen auf das Gesamtgewicht des pflanzenbasierten Lebensmittelprodukts, beträgt.

4. Verfahren nach Anspruch 3, **gekennzeichnet dadurch, dass** es sich bei dem Beta-Glucan abbauenden Enzym um Beta-Glucanase, bevorzugt pilzliche Beta-Glucanase, handelt.

5. Verfahren nach Anspruch 1 oder 2, **gekennzeichnet dadurch, dass** der pflanzenbasierte Rohstoff kein Beta-Glucan umfasst.

6. Verfahren nach einem der vorhergehenden Ansprüche, **gekennzeichnet dadurch, dass** das stärkeabbauende Enzym ausgewählt ist aus der Gruppe bestehend aus Alpha-Amylase, Beta-Amylase, Pullulanase und pilzlicher Alpha-Amylase, bevorzugt pilzlicher Alpha-Amylase.

7. Verfahren nach einem der Ansprüche 1, 2, 3, 4 oder 6, **gekennzeichnet dadurch, dass** der pflanzenbasierte Rohstoff ausgewählt ist aus der Gruppe bestehend aus pflanzlichem Getreide, Hafer, Gerste, Weizen, Roggen, Reis, Mais, Buchweizen, Hirse, Soja, Stärken, Beta-Glucanen, Schleimstoffen, Flachs, Pilzen, Hanf, Erbsen, Linsen, Knollen, Früchten, Beeren und Presskuchen aus ölhaltigen Pflanzen und Samen oder Wachsgetreide, Wachshafer, Wachsgerste, Wachsweizen, Wachsroggen, Wachsreis oder Wachsmais, bevorzugt Getreide, bevorzugter Hafer.

8. Verfahren nach einem der vorhergehenden Ansprüche, **gekennzeichnet dadurch, dass** der pflanzenbasierte Rohstoff in Schritt a. in Pulverform vorliegt, bevorzugt mit einer Teilchengröße im Bereich von 5 bis 300 µm, bevorzugter 10 bis 275 µm.

9. Verfahren nach einem der vorhergehenden Ansprüche, **gekennzeichnet dadurch, dass** Schritt a. ferner umfasst: Hinzufügen von Zucker in einer Menge von 1 bis 5 Gew.-%, bevorzugt 2 bis 4 Gew.-%, bezogen auf das Gesamtgewicht der Suspension, und wahlweise von anderen Bestandteilen wie Öl, Salz, Mineralen, wie Calciumcarbonat und Tricalciumphosphat, und Vitaminen.

10. Verfahren nach einem der vorhergehenden Ansprüche, **gekennzeichnet dadurch, dass** es ferner umfasst: Hinzufügen des Enzyms Transglutaminase zur Suspension in einer Menge von 0,1 bis 5 U pro 1 g Protein, bevorzugt 0,1 bis 1 U pro 1 g Protein, bevorzugter 0,3 bis 0,6 U pro 1 g Protein, höchstbevorzugt 0,4 bis 0,5 U pro 1 g Protein.

11. Verfahren nach einem der vorhergehenden Ansprüche, **gekennzeichnet dadurch, dass** die warme Suspension 3 bis 30 Gew.-% Stärke, bevorzugt 4 bis 20 Gew.-% Stärke, bevorzugter 4 bis 12 Gew.-% Stärke umfasst.

12. Pflanzenbasiertes Lebensmittelprodukt, **gekennzeichnet dadurch, dass** es teilhydrolysierte Stärke umfasst, die durch begrenzte Hydrolyse gewonnen wurde, wobei die Stärke einen DP-Wert (Polymerisationsgrad) von mehr als 10.000, aber nicht mehr als 60.000, umfasst, so dass die Stärke die Textur des pflanzenbasierten Produkts stabilisiert und die Schneidbarkeit in der Produkttextur verhindert, wobei das pflanzenbasierte Lebensmittelprodukt nicht mehr als 0,05 Gew.-% der kleinen Zuckermoleküle Glucose, Maltose und Maltotriose umfasst, und dass das pflanzenbasierte Produkt nicht mehr als 0,3 Gew.-% natives Beta-Glucan, bezogen auf das Gesamtgewicht des pflanzenbasierten Lebensmittelprodukts, umfasst.

13. Pflanzenbasiertes Lebensmittelprodukt nach Anspruch 12, **gekennzeichnet dadurch, dass** das Produkt Hafer umfasst.

14. Pflanzenbasiertes Lebensmittelprodukt nach Anspruch 12 oder 13, **gekennzeichnet dadurch, dass** es sich bei dem Produkt um Joghurt, Trinkjoghurt, Crème fraîche oder Sauerrahm, Sauermilch, Pudding, stichfesten Joghurt, Smoothie, Quark oder Frischkäse, bevorzugt Joghurt, handelt.

15. Pflanzenbasiertes Lebensmittelprodukt nach einem der Ansprüche 12 bis 14, **gekennzeichnet dadurch, dass** das Produkt ferner lebensfähige Bakterien und/oder Probiotika enthält.

16. Pflanzenbasiertes Lebensmittelprodukt nach einem der Ansprüche 12 bis 15, **gekennzeichnet dadurch, dass** das Produkt einen pH-Wert von 4 bis 4,9, bevorzugt 4,5, aufweist.

17. Pflanzenbasiertes Lebensmittelprodukt nach einem der Ansprüche 12 bis 16, **gekennzeichnet dadurch, dass** das Produkt ferner Zucker in einer Menge von 1 bis 5 Gew.-%, bevorzugt 2 bis 4 Gew.-%, bezogen auf das Gesamtgewicht der Suspension, und wahlweise andere Bestandteile wie Öl, Salz, Minerale, wie Calciumcarbonat und Tricalciumphosphat, und Vitamine umfasst.

18. Pflanzenbasiertes Lebensmittelprodukt nach einem der Ansprüche 12 bis 17, **gekennzeichnet dadurch, dass** das Produkt Protein von 0,5 bis 20 Gew.-%, bezogen auf das Gesamtgewicht des Produkts, bevorzugt 0,5 bis 12 Gew.-% oder 1 bis 8 Gew.-% oder 2 bis 6 Gew.-%, bezogen auf das Gesamtgewicht des Produkts, umfasst.

19. Verwendung einer begrenzten Hydrolyse von Stärke zur Herstellung eines pflanzenbasierten Lebensmittelprodukts, wobei die im pflanzenbasierten Rohstoff enthaltene native Stärke mit einem Enzym, das ausgewählt ist aus der Gruppe bestehend aus Alpha-Amylase, Beta-Amylase und Pullulanase und pilzlicher Alpha-Amylase, bevorzugt pilzlicher Alpha-Amylase, teilhydrolysiert wird, wobei die teilhydrolysierte Stärke einen Polymerisationsgradwert von mehr als 10.000, aber nicht mehr als 60.000 umfasst und nicht mehr als 0,05 Gew.-% der kleinen Zuckermoleküle Glucose, Maltose und Maltotriose umfasst.

20. Verwendung nach Anspruch 19, **gekennzeichnet dadurch, dass** die native Stärke hydrolysiert wird, bevor eine den pflanzenbasierten Rohstoff umfassende Suspension auf eine Temperatur von über 80 °C erwärmt wird.

## Revendications

1. Procédé de fabrication d'un produit alimentaire à base végétale, **caractérisé en ce que** le procédé comprend les étapes consistant à :
a. fournir une suspension comprenant de l'amidon et, facultativement, des protéines en mélangeant de l'eau et au moins une matière première d'origine végétale contenant de l'amidon natif et, facultativement, des protéines,
b. chauffer ladite suspension pour obtenir une suspension chaude avec une température comprise entre 50 et 70 °C, de préférence entre 55 et 65 °C, plus préférentiellement entre 58 et 62 °C,
c. préparer une suspension comprenant de l'amidon partiellement hydrolysé ayant une valeur du degré polymérisation supérieure à 10 000, mais pas supérieure à 60 000, ne comprenant pas plus de 0,05 % en poids de petites molécules de sucre de glucose, maltose et maltotriose, en traitant ladite suspension chaude avec au moins une enzyme dégradant l'amidon afin d'obtenir une suspension comprenant de l'amidon partiellement hydrolysé,
d. soumettre ladite suspension comprenant de l'amidon partiellement hydrolysé à un traitement thermique afin d'obtenir une suspension traitée thermiquement comprenant de l'amidon partiellement hydrolysé,
e. refroidir ladite suspension traitée thermiquement comprenant de l'amidon partiellement hydrolysé,
f. fermenter et/ou acidifier la suspension obtenue à l'étape e. en ajoutant au moins une culture de départ à la suspension et en fermentant le mélange jusqu'à ce qu'il atteigne une valeur pH de 4 à 4,9, de préférence de 4,5, afin d'obtenir un produit alimentaire à base végétale fermenté, et, facultativement, refroidir davantage et/ou ajouter de la confiture, du bêta-glucane, des arômes et/ou des additifs à ladite suspension, et
g. obtenir un produit alimentaire à base végétale.

2. Procédé selon la revendication 1, **caractérisé en ce que** la température de la suspension à l'étape a. est comprise entre 5 et 42 °C, de préférence entre 5 et 30 °C, plus préférentiellement entre 5 et 20 °C.

3. Procédé selon la revendication 1 ou 2, **caractérisé en ce que** ladite matière première d'origine végétale comprend du bêta-glucane, et **en ce que** le procédé comprend également une étape consistant à traiter la suspension à l'étape a. ou à l'étape b. avec au moins une enzyme dégradant le bêta-glucane afin d'obtenir une suspension essentiellement exempte de bêta-glucane natif, de sorte que la teneur en bêta-glucane natif issu de la matière première d'origine végétale soit inférieure à 0,3 % en poids par rapport au poids total du produit alimentaire à base végétale.

4. Procédé selon la revendication 3, **caractérisé en ce que** l'enzyme dégradant le bêta-glucane est la bêta-glucanase, de préférence la bêta-glucanase fongique.

5. Procédé selon la revendication 1 ou 2, **caractérisé en ce que** la matière première d'origine végétale ne contient pas de bêta-glucane.

6. Procédé selon l'une des revendications précédentes, **caractérisé en ce que** l'enzyme dégradant l'amidon est choisie dans le groupe constitué de l'alpha-amylase, de la bêta-amylase, de la pullulanase et de l'alpha-amylase fongique, de préférence l'alpha-amylase fongique.

7. Procédé selon l'une des revendications 1, 2, 3, 4 ou 6, **caractérisé en ce que** la matière première d'origine végétale est choisie dans le groupe constitué des céréales végétales, de l'avoine, de l'orge, du blé, du seigle, du riz, du maïs, du sarrasin, du millet, du soja, des amidons, des bêta-glucanes, des mucilages, du lin, des champignons, du chanvre, des pois, des lentilles, des tubercules, des fruits, des baies et des tourteaux de plantes et graines oléagineuses, ou des céréales cireuses, de l'avoine cireuse, de l'orge cireuse, du blé cireux, du seigle cireux, du riz cireux ou du maïs cireux, de préférence des céréales, plus préférentiellement de l'avoine.

8. Procédé selon l'une des revendications précédentes, **caractérisé en ce que** la matière première d'origine végétale à l'étape a. est sous forme de poudre, de préférence avec une taille de particules comprise entre 5 et 300 µm, plus préférentiellement entre 10 et 275 µm.

9. Procédé selon l'une des revendications précédentes, **caractérisé en ce que** l'étape a. comprend également l'étape consistant à ajouter du sucre en une quantité de 1 à 5 % en poids, de préférence de 2 à 4 % en poids, par rapport au poids total de la suspension, et, facultativement, d'autres ingrédients tels que de l'huile, du sel, des minéraux, tels que le carbonate de calcium et le phosphate tricalcique, et des vitamines.

10. Procédé selon l'une des revendications précédentes, **caractérisé en ce que** qu'il comprend également l'étape consistant à ajouter à la suspension l'enzyme transglutaminase en une quantité de 0,1 à 5 U par 1 g de protéines, de préférence de 0,1 à 1 U par 1 g de protéines, plus préférentiellement de 0,3 à 0,6 U par 1 g de protéines, et tout particulièrement de 0,4 à 0,5 U par 1 g de protéines.

11. Procédé selon l'une des revendications précédentes, **caractérisé en ce que** la suspension chaude comprend 3 à 30 % en poids d'amidon, de préférence 4 à 20 % en poids d'amidon, plus préférentiellement 4 à 12 % en poids d'amidon.

12. Produit alimentaire à base végétale, **caractérisé en ce qu'**il comprend de l'amidon partiellement hydrolysé, qui a été obtenu par hydrolyse limitée, ledit amidon ayant une valeur du degré de polymérisation (DP) supérieure à 10 000 mais pas supérieure à 60 000, de telle sorte que l'amidon stabilise la texture du produit à base végétale et empêche la découpabilité dans la texture du produit, ledit produit alimentaire à base végétale ne comprenant pas plus de 0,05 % en poids de petites molécules de sucre de glucose, maltose et maltotriose, et que ledit produit à base végétale ne comprend pas plus de 0,3 % en poids de bêta-glucane natif par rapport au poids total du produit alimentaire à base végétale.

13. Produit alimentaire à base végétale selon la revendication 12, **caractérisé en ce que** le produit comprend de l'avoine.

14. Produit alimentaire à base végétale selon la revendication 12 ou 13, **caractérisé en ce que** le produit est du yaourt, du yaourt à boire, de la crème fraîche ou de la crème aigre, du lait caillé, du pudding, du yaourt ferme, des smoothies, du fromage blanc ou du fromage frais, de préférence du yaourt.

15. Produit alimentaire à base végétale selon l'une des revendications 12 à 14, **caractérisé en ce que** le produit contient également des bactéries viables et/ou des probiotiques.

16. Produit alimentaire à base végétale selon l'une des revendications 12 à 15, **caractérisé en ce que** le produit présente une valeur pH de 4 à 4,9, de préférence de 4,5.

17. Produit alimentaire à base végétale selon l'une des revendications 12 à 16, **caractérisé en ce que** le produit comprend également du sucre en une quantité de 1 à 5 % en poids, de préférence de 2 à 4 % en poids par rapport au poids total de la suspension, et, facultativement, d'autres ingrédients tels que de l'huile, du sel, des minéraux, tels que le carbonate de calcium et le phosphate tricalcique, et des vitamines.

18. Produit alimentaire à base végétale selon l'une des revendications 12 à 17, **caractérisé en ce que** le produit comprend des protéines à raison de 0,5 à 20 % en poids par rapport au poids total du produit, de préférence de 0,5 à 12 % en poids, ou de 1 à 8 % en poids, ou de 2 à 6 % en poids, par rapport au poids total du produit.

19. Utilisation d'une hydrolyse limitée de l'amidon pour la fabrication d'un produit alimentaire à base végétale, dans lequel l'amidon natif contenu dans la matière première d'origine végétale est partiellement hydrolysé avec une enzyme choisie dans le groupe constitué de l'alpha-amylase, de la bêta-amylase et de la pullulanase et de l'alpha-amylase fongique, de préférence de l'alpha-amylase fongique, l'amidon partiellement hydrolysé présentant une valeur du degré de polymérisation supérieure à 10 000, mais pas supérieure à 60 000, et ne comprenant pas plus de 0,05 % en poids de petites molécules de sucre de glucose, maltose et maltotriose.

20. Utilisation selon la revendication 19, **caractérisé en ce que** l'amidon natif est hydrolysé avant le chauffage d'une suspension comprenant la matière première d'origine végétale à une température supérieure à 80 °C.
